# FASCICULE DE BREVET EUROPEEN

(11) **EP 2 830 915 B1**
(45) Date de publication et mention de la délivrance du brevet: **09.01.2019**
(21) Numéro de dépôt: 13719936.0
(22) Date de dépôt: 28.03.2013
(51) Int. Cl.: B60S 3/04, B08B 3/02, B05B 12/00

(54) **DISPOSITIF DE LAVAGE D'UN VÉICULE À LANCE MANUPORTÉE**
FAHRZEUGWASCHSYSTEM MIT EINER TRAGBAREN DÜSE
VEHICLE WASHING DEVICE INCLUDING A HANDHELD NOZZLE

(30) Priorité: 28.03.2012 FR 1252786
(43) Date de publication de la demande: 04.02.2015
(73) Titulaire: Financière Clairac, 75116 Paris (FR)
(72) Inventeur: BROUCHET, Yves, F-67000 Strasbourg (FR); CHENDRI, Farouk, F-67100 Strasbourg (FR); FRANCOIS, Rémy, F-67270 Saessolsheim (FR)
(74) Mandataire: Kessler, Marc
(86) Numéro de dépôt international: PCT/FR2013/050670
(87) Numéro de publication internationale: WO 2013/144513

(56) Documents cités:
- DE-A1- 10 241 829
- GB-A- 1 255 733
- US-A- 1 461 824
- US-A- 2 391 177
- US-A1- 2003 201 347

## Description

La présente invention concerne un dispositif de lavage d'un véhicule du type comportant une lance projetant un jet de liquide sous pression à destination dudit véhicule. Les lances en question sont alors manuportées par leurs utilisateurs, et disposées à l'extrémité d'un tuyau flexible véhiculant le liquide éventuellement enrichi de produits destiné à améliorer l'efficacité du jet, l'ensemble faisant partie de sites de lavage de véhicules fournissant cet équipement en général sur plusieurs emplacements contigus.

Le contexte est le suivant : de tels dispositifs de lavage à haute pression à lances manuportées sont implantés dans des centres de lavage dotés de pistes ou box parallèles constituant autant d'emplacements individualisés pour les véhicules. Dans chaque piste, la lance de lavage est disposée, lorsqu'elle n'est pas utilisée, dans un fourreau duquel elle peut être extraite pour asperger le véhicule. Le lavage est basé sur un double principe : mécanique, assuré par la pression du jet de liquide, et chimique, pris en charge par des additifs ajoutés au liquide projeté.

La lance équipe, comme indiqué, l'extrémité d'une tuyauterie souple dont l'autre extrémité est solidarisée à un portique supérieur de préférence rotatif, situé dans le box à un emplacement qui est choisi raisonnablement centré pour permettre le nettoyage de toutes les faces du véhicule dans des conditions correctes. Dans la plupart des cas, le portique est en pratique implanté centralement dans le plafond du box, de telle sorte que l'utilisateur puisse aisément contourner la voiture tout en actionnant la lance de lavage dont la tuyauterie suit ses déplacements puisque le portique est rotatif. On notera cependant que la longueur du tuyau reste constante, de sorte que l'opération de lavage ne se déroule pas de manière identique selon la position de l'utilisateur par rapport audit portique.

Par exemple le document DE10241829 décrit un tel dispositif de lavage, dont le portique comprend deux bras soutenant chacun un tuyau flexible, et propose l'emploi de moyens magnétiques pour verrouiller chaque bras dans une position initiale, afin d'éviter une collision entre ces bras et un pivotement involontaire.

De tels dispositifs comportent en général également une unité de commande sous forme d'un coffret doté d'une manette tournant sur un cadran et permettant la sélection de différentes phases de lavages, ainsi qu'un bloc technique de production / distribution des différents liquides (eau
savonneuse, eau munie d'un produit lustrant, eau déminéralisée, ...) correspondant à chaque phase du cycle, et un module de contrôle dudit bloc technique.

L'utilisateur se déplace tout autour du véhicule pour le nettoyer en totalité, armé de la lance et entrainant du même coup le tuyau, ce dernier présentant
en tout état de cause une longueur suffisante pour permettre - sans occasionner de tensions parasites - de faire le tour du véhicule en maintenant la lance à une certaine distance de la carrosserie pour les besoins du lavage, et cela pour des véhicules de tailles diverses auxquels il faut que l'utilisateur puisse s'adapter. Dans l'hypothèse, qui constitue en général une bonne approximation de la réalité, où le portique est à peu près centré par rapport au véhicule en cours de lavage, il y a évidemment plus de mou dans le tuyau lorsque l'utilisateur est placé au niveau des faces latérales du véhicule que lorsqu'il se trouve devant ou derrière, puisqu'alors sa longueur résiduelle, non nécessaire, est bien plus importante.

La longueur donnée au tuyau, prédéterminée en vue de conserver à l'utilisateur un confort d'utilisation en toute position par rapport au véhicule, est telle que des portions dudit tuyau peuvent très bien reposer par terre, notamment et surtout dans les passages au cours desquels la longueur nécessaire au lavage à distance correcte du véhicule est la plus courte. Or, dans de tels environnements, le sol est en permanence sali par les projections de liquide rebondissant de la carrosserie du véhicule, contenant notamment les salissures enlevées par le jet sous pression. Autant dire que le tuyau est sale dans la plupart des cas, en particulier dans sa portion située au voisinage de la lance, la plus susceptible de trainer par terre lorsque sa longueur « utile » est courte.

Pendant les déplacements autour du véhicule en phase active de lavage, c'est à dire pendant qu'il y a projection de liquide, il existe également des risques d'éclaboussures intempestives qui peuvent salir plus directement le tuyau, toujours dans sa partie la plus proche de la lance. Il n'est jamais prévu que le tuyau soit lavé, en tout cas pas entre des lavages successifs par des utilisateurs arrivant séquentiellement sur les pistes.

Or l'expérience montre que pendant lesdits déplacements, les utilisateurs ne se contentent pas de tenir la lance, la longueur du tuyau pouvant parfois gêner leur progression et/ou la manipulation de la lance, et rendant au final nécessaire dans nombre de cas une prise au niveau du tuyau. Cette seconde prise permet d'éviter que les longueurs superflues de tuyau, qui sont nécessaires à certains endroits et ne le sont pas dans d'autres, ne gênent lorsqu'on parcourt la périphérie du véhicule en cours de lavage, lance à la main.

Prendre le tuyau à la main conduit cependant quasi inévitablement à se salir la main qui le saisit, car le tuyau est toujours sale, mais cela est
considéré par l'utilisateur comme un moindre mal, car cela permet, en prenant garde en permanence au positionnement du tuyau par des manipulations constantes, d'empêcher que les longueurs superflues ne viennent au contact des vêtements, chaussures etc..

La présente invention a pour objectif de remédier aux différents inconvénients précités, c'est à dire à titre essentiel de préserver autant que possible l'utilisateur de toute salissure pendant l'opération de lavage d'un véhicule.

Pour remplir cette fonction, et d'autres qui apparaîtront à la lecture de ce qui suit, le dispositif de lavage de l'invention, à lance manuportée placée classiquement à l'extrémité d'un tuyau flexible et projetant un jet de liquide sous pression à destination du véhicule, se caractérise principalement en ce qu'il comporte des moyens de préhension, disposés sur ledit tuyau, consistant en deux poignées fixées sur ledit tuyau à deux distances différentes par rapport à l'extrémité dudit tuyau raccordée à la lance.

L'idée est d'offrir un double maintien/guidage manuel protégé de l'outil global de nettoyage, une main étant dévolue à la lance, orientant et positionnant le jet sous pression de façon à réaliser un nettoyage optimal, alors que l'autre main gère le tuyau, empêchant notamment la longueur superflue d'entraver le lavage pendant le trajet de l'utilisateur autour de la voiture et, surtout, permettant d'éviter tout contact de l'ensemble tuyau/lance avec ce qui doit être préservé de la saleté inhérente à ce type d'opération, le tout avec des moyens spécifiques et non plus en saisissant le tuyau nu.

Les moyens de préhension consistant en en deux poignées fixées sur le tuyau à deux distances différentes par rapport à l'extrémité du tuyau raccordée à la lance, il y a donc possibilité de saisir confortablement ce dernier pour le positionner à chaque instant d'une manière favorable simultanément par rapport au véhicule, à l'utilisateur et à la piste sur laquelle s'effectue l'opération de nettoyage.

De préférence, les deux distances différentes par rapport à l'extrémité du tuyau raccordée à la lance, correspondent à deux emplacements privilégiés pour la prise du tuyau par la main de l'utilisateur. L'utilisateur, selon sa taille et sa position avec la lance par rapport au véhicule, a tendance à tenir le tuyau à différents emplacements. Lorsqu'il nettoie les parois latérales du véhicule, la lance est à proximité de son corps, et sa deuxième main vient tenir le tuyau au niveau d'une première prise proximale de la lance. Lorsqu'il nettoie les parties avant et arrière, ainsi que le toit du véhicule, la lance est
éloignée de son corps, et sa deuxième main vient tenir le tuyau au niveau d'une seconde prise distale de la lance.

Selon une possibilité, chaque poignée est coulissante et dotée d'un organe de commande de moyens de blocage de la poignée par rapport au tuyau, s'exerçant à l'encontre de moyens de rappel entre une position de repos dans laquelle les moyens de blocage immobilisent la poignée et au moins une position active dans laquelle les moyens de blocage sont inactivés et libèrent la poignée qui peut coulisser. Dans ce cas, une multitude de positions différentes de la poignée existe, pour s'adapter à tous les gestes de l'utilisateur avec la lance, quelle que soit sa position par rapport au véhicule.

En pratique, chaque poignée est fixée sur le tuyau à une distance du portique rotatif telle qu'elle se trouve sensiblement au niveau des épaules de l'utilisateur qui se déplace à la périphérie du véhicule. Dans cette hypothèse, le placement de la poignée à ce niveau est particulièrement adapté à une préhension efficace du tuyau dans l'optique d'éviter tout contact avec le corps et donc les vêtements de l'utilisateur, dans la mesure où cet emplacement se situe en haut de son corps et que, comme le tuyau vient d'en haut, du portique rotatif, on a ainsi la maîtrise des mouvements de la portion du tuyau immédiatement en amont de la lance.

Or il s'agit typiquement de la longueur de tuyau qui permet de s'adapter à la distance variable entre l'utilisateur et le véhicule, donc de la portion de tuyau qui est, dans certaines positions, superflue. C'est cette partie qui peut poser problème en termes de salissure des vêtements car sa longueur varie et qu'au cours de la rotation, des interactions peuvent se créer entre le déplacement de l'utilisateur et le positionnement du tuyau. Des boucles non désirées peuvent ainsi être générées, qui entravent ou à tout le moins gênent la circulation et confèrent au tuyau des mouvements parfois incontrôlables lorsqu'il se détend, sauf à disposer de la poignée de l'invention qui permet un contrôle bien plus efficace desdits mouvements.

Selon une possibilité, chaque poignée est dotée de moyens de protection contre les salissures de la zone de préhension de la poignée. Par exemple, ces moyens de protection consistent en deux collerettes placées respectivement aux deux extrémités de chaque poignée et protégeant la zone centrale de la poignée contre les salissures, chaque collerette s'étendant radialement sur tout le pourtour de l'extrémité de la poignée. Dans ce cas, les bordures extérieures des collerettes sont en contact avec le sol sale à la place de la zone centrale de la poignée, correspondant à la zone de préhension. Cette dernière reste donc toujours propre.

Aux fins d'optimiser la protection contre les saletés, et de garantir à l'utilisateur la propreté maximale, chaque poignée peut être partiellement entourée d'une coque de protection. L'effet est à nouveau double : d'une part, au cours d'une phase de lavage, la main est directement protégée des projections et d'autre part, lorsqu'il ne s'agit pas d'une phase active, la poignée proprement dite est protégée contre les éventuels contact direct avec le sol lorsque le tuyau traine par exemple par terre.

De façon avantageuse, chaque poignée est dotée de moyens de communication, du type pictogramme. La forme en elle-même de la poignée, suggérant par exemple une fonction, peut être un vecteur de communication.

Optionnellement, chaque poignée peut être dotée d'un support publicitaire.

De manière générale, l'invention couvre toutes formes de poignées adaptées à offrir une bonne préhension du tuyau à un utilisateur de taille moyenne procédant au lavage de son véhicule dans une piste de lavage telle que définie ci-dessus.

## Revendications

1. Dispositif de lavage d'un véhicule comportant une lance projetant un jet de liquide sous pression à destination d'un véhicule, ladite lance étant manuportée par un utilisateur et disposée à l'extrémité d'un tuyau flexible véhiculant le liquide et issu d'un portique rotatif placé au dessus du véhicule, **caractérisé en ce qu'**il comporte des moyens de préhension disposés sur ledit tuyau consistant en deux poignées fixées sur ledit tuyau à deux distances différentes par rapport à l'extrémité dudit tuyau raccordée à la lance.

2. Dispositif de lavage d'un véhicule selon la revendication précédente dans lequel chaque poignée est coulissante et dotée d'un organe de commande de moyens de blocage de la poignée par rapport au tuyau, s'exerçant à l'encontre de moyens de rappel entre une position de repos dans laquelle les moyens de blocage immobilisent la poignée et au moins une position active dans laquelle les moyens de blocage sont inactivés et libèrent la poignée qui peut coulisser.

3. Dispositif de lavage d'un véhicule selon l'une des revendications précédentes, dans lequel chaque poignée est fixée sur le tuyau à une distance du portique rotatif telle qu'elle se trouve sensiblement au niveau des épaules de l'utilisateur qui se déplace à la périphérie du véhicule.

4. Dispositif de lavage d'un véhicule selon l'une des revendications précédentes, dans lequel chaque poignée est dotée de moyens de protection contre les salissures de la zone de préhension de la poignée.

5. Dispositif de lavage d'un véhicule selon la revendication précédente, dans lequel les moyens de protection consistent en deux collerettes placées respectivement aux deux extrémités de chaque poignée et protégeant la zone centrale de la poignée contre les salissures, chaque collerette s'étendant radialement sur tout le pourtour de l'extrémité de la poignée.

6. Dispositif de lavage d'un véhicule selon l'une des revendications précédentes, dans lequel chaque poignée est partiellement entourée d'une coque de protection.

7. Dispositif de lavage d'un véhicule selon l'une des revendications précédentes, dans lequel chaque poignée est dotée de moyens de communication, du type pictogramme.

8. Dispositif de lavage d'un véhicule selon l'une des revendications précédentes, dans lequel chaque poignée est dotée d'un support publicitaire.

## Patentansprüche

1. Fahrzeuwaschsystem, umfassend einen Düse, die einen Strahl Flüssigkeit unter Druck in Richtung eines Fahrzeugs projiziert, wobei die Düse von einem Benutzer getragen wird und am Ende eines flexiblen Schlauchs angeordnet ist, der die Flüssigkeit befördert und aus einem Drehgerüst stammt, das über dem Fahrzeug platziert ist, **dadurch gekennzeichnet, dass** es Vorspannungsmittel umfasst, die auf dem Schlauch angeordnet sind, die aus zwei Griffen bestehen, die auf dem Schlauch in zwei verschiedenen Abständen mit Bezug auf das Ende des an die Düse verbunden Schlauchs fixiert sind.

2. Fahrzeugwaschsystem nach dem vorhergehenden Anspruch, wobei jeder Griff gleitend ist und mit einem Organ zur Steuerung von Mitteln zur Blockierung des Griffs mit Bezug auf den Schlauch dotiert ist, der gegen Mittel zur Rückstellung zwischen einer Ruheposition, in der die Mittel zur Blockierung den Griff immobilisieren, und mindestens einer aktiven Position ausgebildet sind, in der die Mittel zur Blockierung deaktiviert sind und den Griff freigeben, der gleiten kann.

3. Fahrzeugwaschsystem nach einem der vorhergehenden Ansprüche, wobei jeder Griff auf dem Schlauch in einem Abstand vom Drehgestell derart fixiert ist, dass er sich im Wesentlichen auf der Ebene der Schultern des Benutzers befindet, der sich im Umkreis des Fahrzeugs bewegt.

4. Fahrzeugwaschsystem nach einem der vorhergehenden Ansprüche, wobei jeder Griff mit Mitteln zum Schutz gegen die Verschmutzungen des Greifbereichs des Griffs dotiert ist.

5. Fahrzeugwaschsystem nach dem vorhergehenden Anspruch, wobei die Mittel zum Schutz aus zwei Kragen bestehen, die jeweils an den zwei Enden jedes Griffs platziert sind und die zentrale Zone des Griffs gegen die Verschmutzungen schützen, wobei sich jeder Kragen radial auf dem gesamten Umfang des Endes des Griffs erstreckt.

6. Fahrzeugwaschsystem nach einem der vorhergehenden Ansprüche, wobei jeder Griff teilweise von einer Schutzschale umgeben ist.

7. Fahrzeugwaschsystem nach einem der vorhergehenden Ansprüche, wobei jeder Griff mit Mitteln zur Kommunikation vom Typ Piktogramm dotiert ist.

8. Fahrzeugwaschvorrichtung nach einem der vorhergehenden Ansprüche, wobei jeder Griff mit einem Werbeträger dotiert ist.

## Claims

1. A device for washing a vehicle including a nozzle spraying a jet of pressurized liquid to a vehicle, said nozzle being handheld by a user and arranged at the end of a flexible hose conveying the liquid and coming from a rotary gantry placed above the vehicle, **characterized in that** it includes gripping means arranged on said hose consisting of two handles fixed on said hose at two different distances relative to the end of said hose connected to the nozzle.

2. The device for washing the vehicle according to the preceding claim, in which each handle slides and is equipped with a member for controlling means for blocking the handle relative to the hose, exerted against return means between an idle position in which the blocking means immobilize the handle and at least one active position in which the blocking means are deactivated and release the handle, which can slide.

3. The device for washing a vehicle according to one of the preceding claims, wherein each handle is fixed on the hose at a distance from the rotary gantry such that it is substantially at shoulder level relative to the user, who moves at the periphery of the vehicle.

4. The device for washing a vehicle according to one of the preceding claims, wherein each handle is provided with means for protecting against grime of the gripping zone of the handle.

5. The device for washing a vehicle according to the preceding claim, wherein the protection means consist of two collars respectively placed at the two ends of each handle and protecting the central zone of the handle against grime, each collar extending radially over the entire perimeter of the end of the handle.

6. The device for washing a vehicle according to one of the preceding claims, wherein each handle is partially surrounded by a protective shell.

7. The device for washing a vehicle according to one of the preceding claims, wherein each handle is provided with communication means, of the icon type.

8. The device for washing a vehicle according to one of the preceding claims, wherein each handle is provided with an advertising medium.
